Europäisches Patentamt

(19) European Patent Office

Office européen des brevets

(11) Publication number: **0 182 645**
**B1**

(12) **EUROPEAN PATENT SPECIFICATION**

(45) Date of publication of patent specification: **23.01.91**

(51) Int. Cl.⁵: **G 09 G 3/36,** G 02 F 1/133

(21) Application number: **85308385.5**

(22) Date of filing: **18.11.85**

(54) Active matrix circuit for liquid crystal displays.

(30) Priority: **16.11.84 JP 242876/84**
**19.04.85 JP 85241/85**
**20.04.85 JP 83622/85**

(43) Date of publication of application:
**28.05.86 Bulletin 86/22**

(45) Publication of the grant of the patent:
**23.01.91 Bulletin 91/04**

(84) Designated Contracting States:
**DE FR GB**

(56) References cited:
**GB-A-2 115 199**

**IEEE TRANSACTIONS ON ELECTRON DEVICES,
vol. ED-26, no. 8, August 1979, New York D.E.
CASTLEBERRY "Varistor-Controlled Liquid-
Cristal Displays"**

(73) Proprietor: **MATSUSHITA ELECTRIC
INDUSTRIAL CO., LTD.**
**1006, Oaza Kadoma**
**Kadoma-shi, Osaka-fu, 571 (JP)**

(72) Inventor: **Yamashita, Ichiro**
**1-5-4, Kisaichi Yamate**
**Katano-shi Osaka-fu 576 (JP)**
Inventor: **Takeda, Mamoru**
**1-9-4 Nasuzukuri**
**Hirakata-shi Osaka-fu 573 (JP)**

(74) Representative: **Crawford, Andrew Birkby et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an active matrix circuit for liquid crystal displays (liquid crystal display is hereinafter referred to as LCD) for driving liquid crystal pixels arranged in a matrix on a liquid crystal display panel).

The active matrix drive method has been known as one of the desirable methods for driving LCDs. The active matrix drive type LCD comprises a plurality of scanning lines extending in X direction, a plurality of signal lines extending in Y direction, and a plurality pairs of a pixel and a switching element disposed at crosspoints of the scanning and signal lines. Each pixel is driven by each respective . switching element. The switching element may be a thin film transistor (TFT, hereafter) or a non-linear device such as a varistor, a metal-insulator-metal (MIM), a diode ring, a back-to-back diode and a MOS transistor diode.

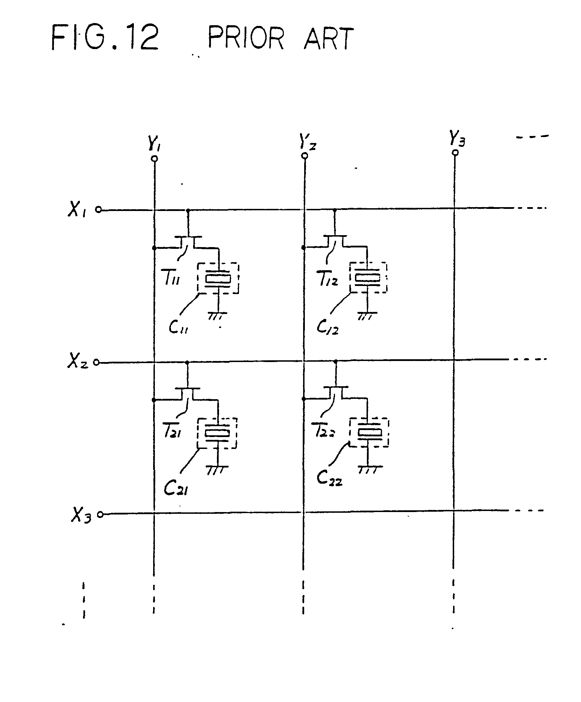

A TFT array as shown in Fig. 12 is known as a typical active matrix circuit for LCDs, as disclosed, for example, in Japanese Laid-open Patent Application No. 60-192369. Referring to Fig. 12, $C_{11}, C_{12}, \ldots$ and $C_{21}, C_{22}, \ldots$ are liquid crystal pixels, $T_{11}, T_{12}, \ldots$ and $T_{21}, T_{22}, \ldots$ are TFTs, $X_1, X_2, X_3, \ldots$ are scanning lines, and $Y_1, Y_2, Y_3, \ldots$ are signal lines. Each TFT is connected at its gate with a respective scanning line, at its source with a respective signal line, and at its drain with one terminal of a respective pixel. The other terminal of the respective pixel is connected with the ground. Each pixel acts as a capacitor. An auxiliary capacitor may be connected in parallel with each pixel.

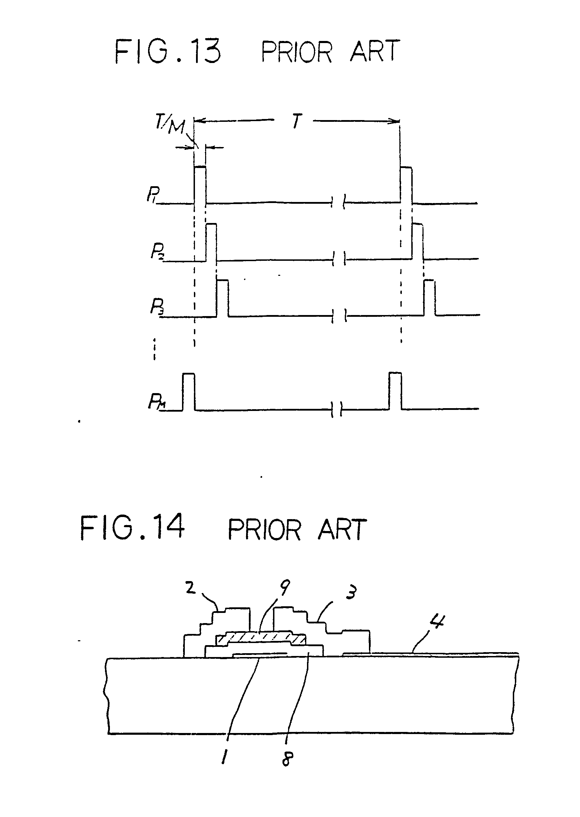

Selection pulses $P_1, P_2, P_3, \ldots$ as shown in Fig. 13 are respectively applied to the scanning lines $X_1, X_2, X_3, \ldots$. In Fig. 13, T and M represent a frame period and the number of scanning lines, respectively. When a scanning line $X_1$ is selected by a selection pulse $P_1$, the TFTs $T_{11}, T_{12}, \ldots$ connected to the scanning line $X_1$ become conductive between the respective sources and drains, (or turn on), so that signal voltages on the signal lines $Y_1, Y_2, \ldots$ are respectively applied to the pixels $C_{11}, C_{12}, \ldots$ which are respectively connected to the TFTs $T_{11}, T_{12}, \ldots$. When the selection pulse $P_1$ is disappeared, the TFTs $T_{11}, T_{12}, \ldots$ connected to the scanning line $X_1$ become un-conductive (or turn off) and the signal voltages applied to the pixels $C_{11}, C_{12}, \ldots$ are held until the scanning line $X_1$ is selected next. In this way, the signal voltages on the signal lines can be accurately transferred to the pixels via the respective TFT switching elements, so that high contrast display can be realized.

However, in the above described configuration, when the number of scanning and signal lines are increased it would be very difficult to produce all of the TFTs without a defect. As shown in Fig. 14 which shows a sectional view of a TFT, the source 2 and drain 3 of the TFT are isolated from the gate 1 via an insulating layer 8 and a semiconductor film 9. In such a structure, the gate and the drain or the gate and the source would be short-circuited due to a pin hole or other defects caused during manufacturing process of the TFT array. Particularly, if the gate and the source are short-circuited all of the TFTs which are connected with the scanning and signal lines connected with the defected TFT will operate out of order. This is a serious defect called "line defect". Further, the source and the drain would also be short-circuited due to a failure of photo-lithography. In this case, the liquid crystal cell connected to the defected TFT will operate abnormally, which is called "point defect".

A conventional LCD panel using non-linear switching elements is disclosed, for example, in "Varistor-Controlled Liquid Crystal Displays" by D. E. Castleberry, IEEE Transactions on Electron Devices, Vol. ED-26, No. 8, pp. 1123—1128 (August 1979). This LCD panel comprises a first substrate mounting thereon a plurality of row electrodes (scanning lines), a plurality of first pixel electrodes and a plurality of non-linear switching elements (varistors in this case), and a second substrate mounting thereon a plurality of column electrodes (signal lines) and a plurality of second pixel electrodes, the first and second substrates being confronted with each other so that a plurality of liquid crystal cells are respectively disposed between the first and second pixel electrodes.

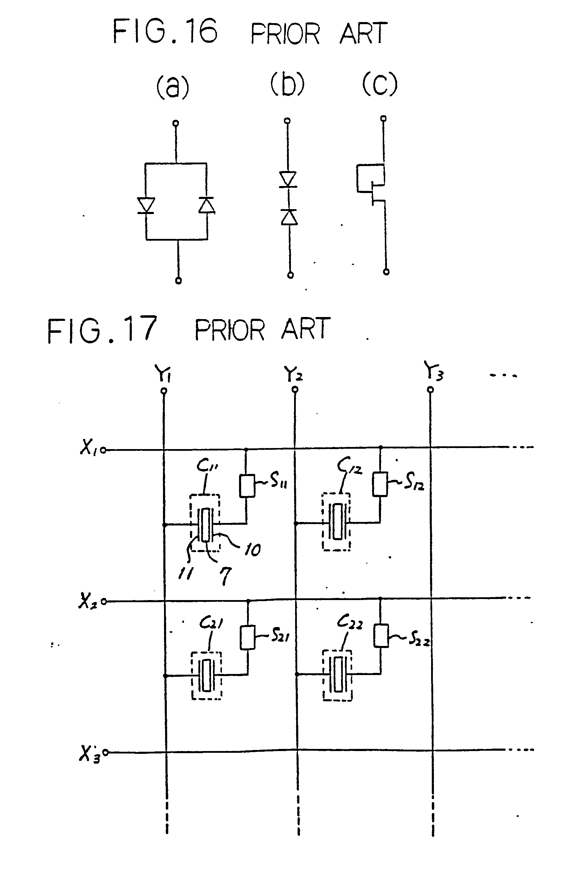

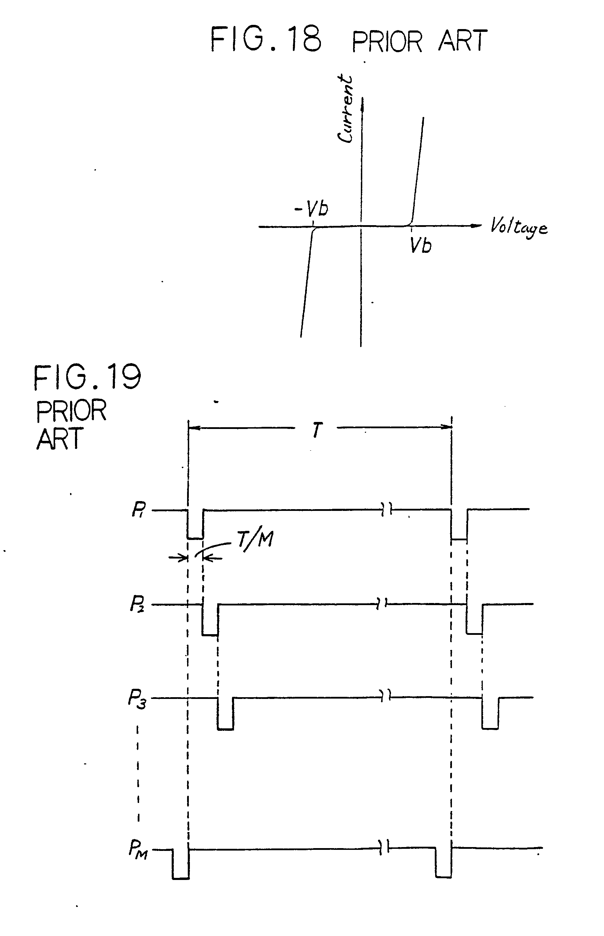

Fig. 17 shows an equivalent circuit of the above LCD panel, in which $S_{11}, S_{12}, \ldots$ and $S_{21}, S_{22}, \ldots$ are the non-linear switching elements 7 is the liquid crystal cell, and 10 and 11 are respectively the first and second pixel electrodes. Each non-linear switching element is connected at one terminal with a respective scanning line, and at the other terminal with the first pixel electrode of a respective pixel. The second pixel electrode of each pixel is connected with a respective signal line. The non-linear switching element has a voltage-current characteristic as shown in Fig. 18 in which $V_b$ is a threshold voltage.

Selection pulses $P_1, P_2, \ldots$ which are negative voltage pulses as shown in Fig. 19 are respectively applied to the scanning lines $X_1, X_2, \ldots$. In Fig. 19, T and M represent a frame period and the number of scanning lines, respectively. A signal voltage applied to each of the signal lines $Y_1, Y_2, \ldots$ is set smaller than the threshold voltage $V_b$ of the non-linear switching element so that the signal voltage is not applied to non-selected pixels. When a selection pulse $P_1$ is applied to the scanning line $X_1$, i.e., the pixels $C_{11}, C_{12}$, connected with the scanning line $X_1$ through the respective non-linear switching elements $S_{11}, S_{12}, \ldots$ are selected, the voltage difference between the signal line $X_1$ and each signal line to which a signal voltage is applied becomes the sum of the peak voltage of the selection pulse $P_1$ and the signal voltage, so that a voltage which is the difference voltage between the sum voltage and the threshold voltage is applied to the respective pixel. After the selection pulse $P_1$ disappeared the voltage across each of the pixels $C_{11}, C_{12}, \ldots$ are held until the scanning line $X_1$ is selected next (in the next frame).

As described above, in the LCD panel using non-linear switching elements, each signal voltage is accurately and independently transferred to a pixel, so that high contrast display without crosstalk can be realized. The other devices usable as the non-linear switching element are a diode ring, a back-to-back diode, a diode-connected MOS transistor, which are respectively shown in Figs. 16(a), (b) and (c), and a MIM.

However, in the above described configuration of the LCD panel, if the number of scanning lines (i.e. the number of pixels) is increased it would be very difficult to produce all of the non-linear switching elements without defects. Some non-linear switching elements would be short-circuited or open-circuited. If one of the non-linear switching elements is defected the pixel connected with the defected switching element is not applied with a normal signal voltage to cause so-called "pixel defect".

An active matrix-addressed liquid crystal display device is disclosed in UK Patent 2115199, comprising a liquid crystal material sandwiched between a semiconductor substrate and a transparent substrate. A matrix of picture elements (pixels) is formed on the semiconductor substrate, each picture element consisting of a storage capacitor (CNij), an electrode for driving the liquid crystal material corresponding to the picture element, and a switching element for addressing the picture element. Column electrodes ($XS_1$, $XS_2$, ... $XS_n$) select picture elements in a row, and row electrodes ($YG_1$, $YG_2$, ... $YG_m$) are provided for scanning in turn the switching elements of rows of picture elements. To reduce the risk of defects blanking out entire rows, the switching elements of each picture element of at least some of the rows consist of MOS transistors ($MA_{mn}$, $MB_{mn}$) connected in parallel, the gates thereof being connected to different, preferably adjacent, row electrodes, e.g. ($YG_i$, $YG_{(i-1)}$).

The present invention provides an active matrix circuit for liquid crystal displays comprising:

a plurality of liquid crystal pixels arranged in a matrix;

a plurality of scanning lines respectively applied with successive selection pulses for selecting said pixels in turn row by row;

a plurality of signal lines applied with signal voltages for being applied to said pixels to be selected; and

a plurality of switching elements responsive to said selection pulses to apply said signal voltages to said pixels;

wherein each pixel of said plurality of pixels is connected to at least two switching elements of said plurality of switching elements said two switching elements being respectively responsive to one of two successive selection pulses applied to two adjacent scanning lines of said plurality of scanning lines to select said each pixel, characterised in that said plurality of switching elements (T) include at least one defective switching element, each defective switching element having at least a first terminal for connection to a corresponding one of said plurality of scanning lines and a second terminal for connection to a corresponding one of said pixels, and in that at least one of said first and second terminals is cut so as to be electrically isolated from the circuit.

The conventional arrangement may be improved by two other methods—one is to add a TFT switching elements in parallel with each TFT switching element; and the other is to add a TFT switching elements in parallel with each TFT switching element and further add a scanning line in parallel with each scanning line, the two parallel scanning lines being applied with a same selection pulse and respectively connected with the gates of the two TFT switching elements. However, these methods are disadvantageous in that if one of the two TFT switching elements is defected the defected elements is difficult to be identified. Further, the latter method is particularly disadvantageous in that the effective display area of the LCD panel is largely reduced.

The above and other objects, features and advantages of the invention will be apparent from the following description taken in connection with the accompanying drawings, in which:

Brief description of the drawings

Fig. 1 is a partial circuit diagram of an embodiment of active matrix circuit using TFT switching elements according to the present invention;

Fig. 2 is a partial mask lay-out pattern diagram of the circuit in Fig. 1;

Fig. 3 is a partial circuit diagram of another embodiment of active matrix circuit using TFT switching elements according to the present invention;

Fig. 4 is an arrangement diagram of color pixels for a LCD having the Fig. 3 circuit configuration;

Fig. 5 is a partial circuit diagram of still another embodiment of active matrix circuit using TFT switching elements according to the present invention;

Fig. 6 is a diagram showing an arrangement of color pixels, scanning lines and signal lines, which is applicable to the Fig. 5 circuit;

Figs. 7(a) and (b) are arrangement diagrams of color pixels for a LCD having the Fig. 5 circuit;

Figs. 8, 9 and 10 are partial circuit diagrams of further embodiments of active matrix circuit using transistor switching elements according to the present invention;

Fig. 11 is a partial mask lay-out pattern diagram of the circuit in Fig. 10;

Fig. 12 is a partial circuit diagram of a typical conventional active matrix circuit using TFT switching element;

Fig. 13 is a signal timing diagram of selection pulses applied to scanning lines of an active matrix circuit using TFT switching elements;

Fig. 14 is a sectional view of a typical TFT;

Fig. 15 is a partial circuit diagram of an embodiment of active matrix circuit using non-linear switching elements according to the present invention;

Fig. 16(a), (b) and (c) show some typical non-linear switching elements usable in the Fig. 15 circuit;

Fig. 17 is a partial circuit diagram of a typical conventional active matrix circuit using non-linear switching elements;

Fig. 18 is a voltage-current characteristic of a non-linear switching element; and

Fig. 19 is a signal timing diagram of selection pulses applied to scanning lines of an active matrix circuit using non-linear switching elements.

Description of the preferred embodiments

In the following description and the accompanying drawings, the following reference symbols will be used:

$X_m$: scanning line (m=1, 2, 3, ... representing a row number;

$Y_n$: signal line (n= 1, 2, 3, ... representing a column number);

$C_{mn}$: liquid crystal pixel;

$T_{mn}$, $T_{mna}$, $T_{mnb}$, $T_{mnc}$: TFT switching element;

$S_{mn}$, $S_{mna}$, $S_{mnb}$: non-linear switching element.

Embodiment 1

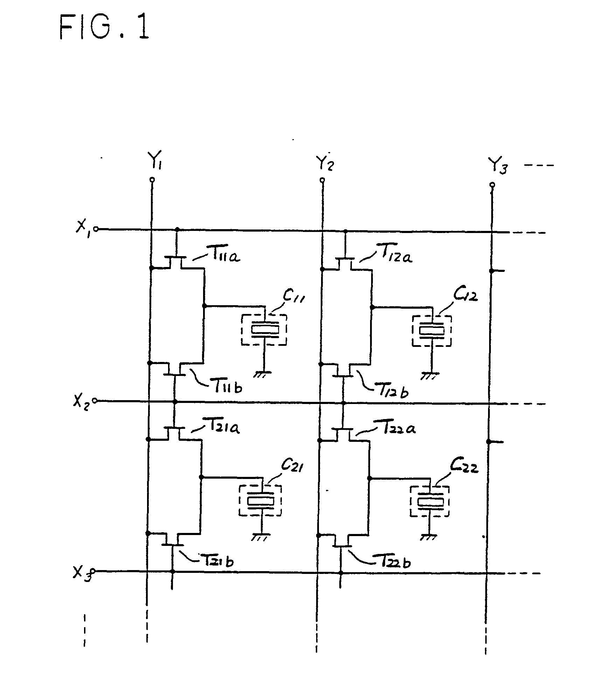

Fig. 1 shows an embodiment of active matrix circuit using TFT switching elements. Referring to Fig. 1, two TFT switching elements ($T_{21a}$ and $T_{21b}$, for example) are provided to control each pixel ($C_{21}$, for example). TFT switching elements $T_{21a}$ and $T_{21b}$ are respectively connected at their gates with two adjacent scanning lines $X_2$ and $X_3$, at their sources in common with a signal line $Y_1$, and at their drains in common with one terminal of a pixel $C_{21}$. The other terminal of the pixel $C_{21}$ is connected with the ground. If the number of rows of the pixel matrix is M, the number of scanning lines is M+1. Selection pulses $P_1$, $P_2$, $P_3$, ..., $P_M$ are applied to the scanning lines $X_1$, $X_2$, $X_3$, ..., $X_{M+1}$ in such an order that $P_1$ is applied to $X_1$ and $X_2$, $P_2$ to $X_3$, $P_3$ to $X_4$, ..., and $P_M$ to $X_{M+1}$ in a frame period T. Accordingly, the pulse width of each selection pulse is T/M, that is, each pixel is selected for a period T/M once in the frame period T.

Referring again to the pixel $C_{21}$, when the selection pulse $P_1$ is applied to the scanning line $X_2$ the TFT switching element $T_{21a}$ turns on, so that a signal voltage $V_{11}$ (for pixel $C_{11}$) on the signal line $Y_1$ is applied to the pixel $C_{21}$. When the next selection pulse $P_2$ is applied to the scanning line $X_3$ the TFT switching element $T_{21b}$ turns on, so that a signal voltage $V_{21}$ (for pixel $C_{21}$) on the signal line $Y_1$ is applied to the pixel $C_{21}$. The pixel $C_{21}$ holds the voltage $V_{21}$ until the scanning line $X_1$ is selected in the next frame. Since the number of scanning lines is large, the effect of the voltage $V_{11}$ temporarily held by the pixel $C_{21}$ can be ignored.

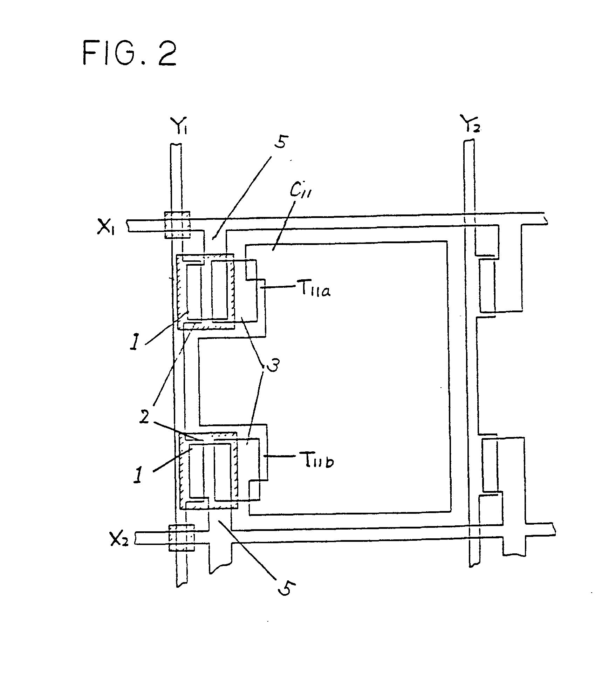

If the TFT switching element $T_{21b}$ is found short-circuited between the gate and source due to a failure in the manufacturing process, the electrical connection between the gate of the TFT switching element $T_{21b}$ and the scanning line $X_3$ is cut off by means, for example, of evaporation by a laser beam, mechanical cutting or chemical etching. A partial mask lay-out pattern of the Fig. 1 circuit is shown in Fig. 2, in which 1 denotes a gate, 2 a source, 3 a drain and 5 a connection part between a gate and a scanning line. As can be seen from Fig. 2, the connection part 5 is designed so as to be easily cut off.

In the condition that the TFT switching element $T_{21b}$ is isolated from the circuit the pixel $C_{21}$ holds the signal voltage $V_{11}$ for the pixel $C_{11}$ applied via the TFT switching element $T_{21a}$ when the scanning line $X_2$ is selected until the scanning line $X_2$ is selected in the next frame. Although the pixel $C_{21}$ holds the same voltage as that held by the adjacent pixel $C_{11}$, this abnormality is hardly sensed by human eyes because there is a close correlation between adjacent pixels. Accordingly, the pixels $C_{21}$, $C_{22}$, ... are not brought to cause a line defect and also the pixel $C_{21}$ is not brought to cause a point defect.

If the TFT switching element $T_{21a}$ is defected and thus isolated from the circuit, the pixel $C_{21}$ apparently operates normally under the control of the TFT switching element $T_{21b}$ to hold the signal voltage $V_{21}$. Further, connection parts between the drains 3 of the TFT switching elements and the pixel electrode are also designed so as to be easily cut off when the short-circuit is caused between the source and drain.

Embodiment 2

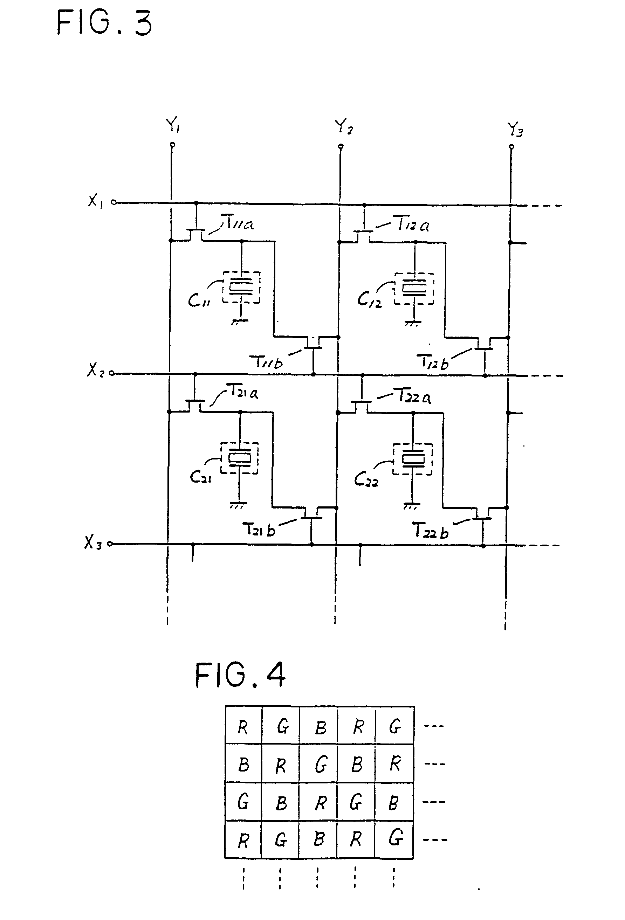

Fig. 3 shows another embodiment of active matrix circuit using TFT switching elements. The configuration in Fig. 3 is the same as that in Fig. 1 except that the two TFT switching elements ($T_{21a}$ and $T_{21b}$, for example) for controlling each pixel ($C_{21}$) are respectively connected at their sources with two adjacent signal lines ($Y_1$ and $Y_2$) disposed at both sides of the pixel ($C_{21}$). The effective signal voltage for driving the pixel $C_{21}$ is a voltage signal which exists on the signal line $Y_2$ when the scanning line $X_3$ is selected by the selection pulse $P_2$.

This embodiment is advantageous for color display. In matrix type color displays, three primary color pixels (R, G, B) are usually arranged so that the color arrangement in each row is shifted from the color arrangement of the previous row as, for example, shown in Fig. 4. If the TFT switching element $T_{22b}$ is defected and thus isolated from the circuit, the signal voltage for the pixel $C_{11}$ is also applied to the pixel $C_{22}$ via the TFT switching element $T_{22a}$. Since the colors of the pixels $C_{11}$ and $C_{22}$ are the same in the arrangement as shown in Fig. 4, the pixel $C_{22}$ holding the signal voltage for the pixel $C_{22}$ is not sensed as a point defect. If the TFT switching element $T_{22a}$ is defected and isolated from the circuit, the pixel $C_{22}$ operates normally under the control of the TFT switching element $T_{22b}$.

Embodiment 3

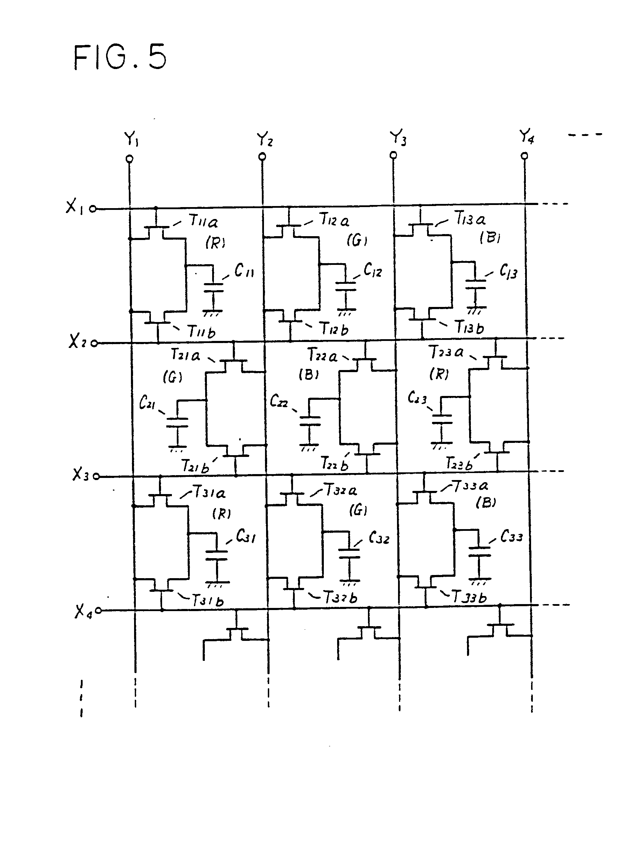

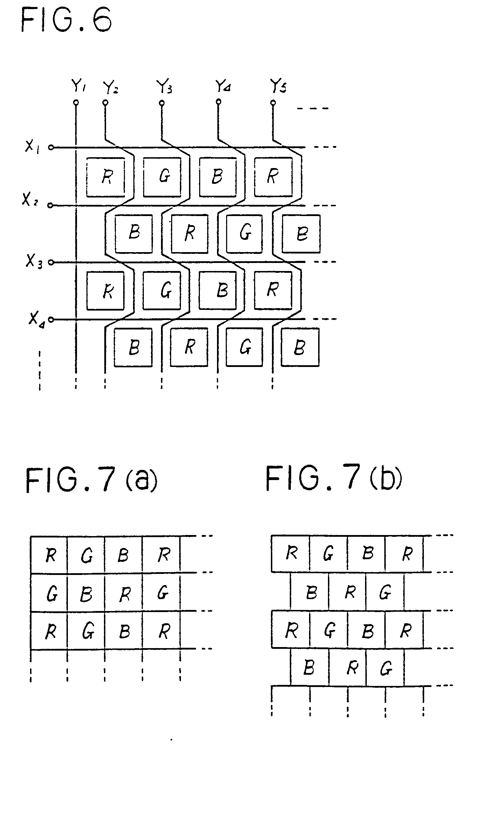

Fig. 5 shows an embodiment of active matrix circuit using TFT switching elements which is used for color displays having a color arrangement as shown in Fig. 7(a). Referring to Fig. 5, the two TFT switching elements for controlling each pixel disposed in each odd number row are connected at their sources in common with a signal line at the left-hand side of the pixel, while the two TFT switching elements for controlling each pixel disposed in each even number row are connected at their sources in common with a signal line at the right-hand side of the pixel. For example, the sources of the TFT switching elements $T_{12a}$ and $T_{12b}$ for controlling the pixel $C_{12}$ in the first row are connected with the signal line $Y_2$ at the left-hand side of the pixel $C_{12}$, while the sources of the TFT switching elements $T_{22a}$ and $T_{22b}$ for controlling the pixel $C_{22}$ in the second row are connected with the signal line $Y_3$ at the right-hand side of the pixel $C_{22}$. Except the above described connection, the other configuration of this embodiment is the same as that of the Fig. 1 embodiment.

The selection pulses as shown in Fig. 13 are applied to the scanning lines in the same way as embodiment 1. Each pixel is normally controlled by lower one $(T_{mnb})$ of the two TFT switching elements connected thereto. If the TFT switching element $T_{22b}$ is defected and thus isolated from the circuit, the pixel $C_{22}$ holds the signal voltage for the pixel $C_{13}$ which is applied from the signal line $Y_3$ via the TFT switching element $T_{22a}$ when the selection pulse $P_1$ is applied to the scanning line $X_2$. Since the pixels $C_{22}$ and $C_{13}$ are arranged to be the same in color as shown in Fig. 7(a), the pixel $C_{22}$ holding the same signal voltage held by the pixel $C_{13}$ is not sensed as a point defect but operates almost normally.

If the color pixels are arranged as shown in Fig. 7(b) in which pixel positions are shifted by half the width of one pixel row by row, the Fig. 5 circuit configuration may be modified as shown in Fig. 6 in which signal lines $Y_2$, $Y_3$, $Y_4$, ... are bent to maintain the same positional relationship to the pixels as that of the Fig. 5 circuit.

Embodiment 4

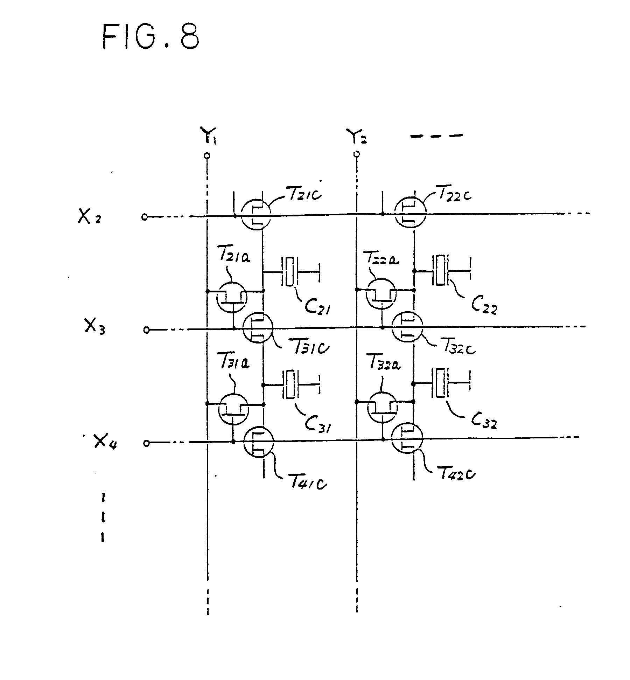

Fig. 8 shows an embodiment of active matrix circuit using transistor switching elements. Each of the transistor switching elements may be a MOS transistor or a TFT. Referring to Fig. 8, a plurality of transistors $(T_{11c}, T_{21c}, T_{31c}, T_{41c}, ...,$ for example) which are respectively connected at their gates with the scanning lines $(X_1, X_2, X_3, X_4, ...)$ are connected in series in each column, and each connecting point of two adjacent transistors of them is connected with a pixel and further with a signal line via another transistor. For example, transistors $T_{21c}$, $T_{31c}$ and $T_{41c}$ which are respectively connected at their gates with the scanning lines $X_2$, $X_3$ and $X_4$ are connected in series. The connecting point of the transistors $T_{21c}$ and $T_{31c}$ is connected with the pixel $C_{21}$, and further with the drain of the transistor $T_{21a}$ which is connected at its gate with the scanning line $X_3$ and at its source with the signal line $Y_1$. The connecting point of the transistors $T_{31c}$ and $T_{41c}$ is connected with the pixel $C_{31}$, and further with the drain of the transistor $T_{31a}$ which is connected at its gate with the scanning line $X_4$ and at its source with the signal line $Y_1$.

The selection pulses as shown in Fig. 13 are applied to the scanning lines in the same way as embodiment 1. When the scanning line $X_3$ is selected a signal voltage $V_{21}$ for the pixel $C_{21}$ is applied from the signal line $Y_1$ to the pixel $C_{21}$ via the transistor $T_{21a}$, and to the pixel $C_{31}$ via the transistors $T_{21a}$ and $T_{31c}$. When the next scanning line $X_4$ is selected a signal voltage $V_{31}$ for the pixel $C_{31}$ is applied from the signal line $Y_1$ to the pixel $C_{31}$ via the transistor $T_{31a}$, and to the pixel $C_{41}$ (not shown) via the transistors $T_{31a}$ and $T_{41c}$. The pixel $C_{31}$ thereafter holds the voltage $V_{31}$ until the scanning line $X_3$ is next selected in the next frame. Although the pixel $C_{31}$ temporarily hold the voltage $V_{21}$ for the pixel $C_{21}$ for a period T/M, it can be ignored because this period T/M is small enough compared with the period T during which the pixel $C_{31}$ holds the voltage $V_{31}$ for itself. Accordingly, the normal operation of the pixel $C_{31}$ is controlled by the transistor $T_{31a}$, and the transistors $T_{21a}$ and $T_{31c}$ do not affect the normal operation of the pixel $C_{31}$.

If the transistor $T_{31a}$ is defected and electrically isolated from the circuit, the pixel $C_{31}$ holds the voltage $V_{21}$ for the period T until the scanning line $X_3$ is next selected in the next frame. Since the pixel $C_{31}$ operates in the same way as the adjacent pixel $C_{21}$, it does not cause a pixel defect.

Embodiment 5

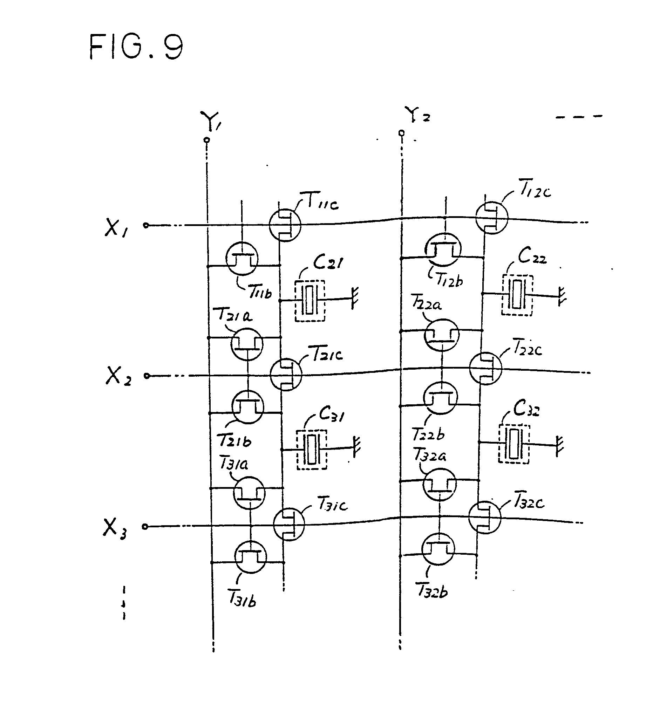

Fig. 9 shows still another embodiment of active matrix circuit using TFT switching elements. This embodiment is apparently a combination of the circuit in Fig. 1 and the circuit in Fig. 8. Accordingly, the operation of this embodiment may be easily understood from the foregoing description.

Embodiment 6

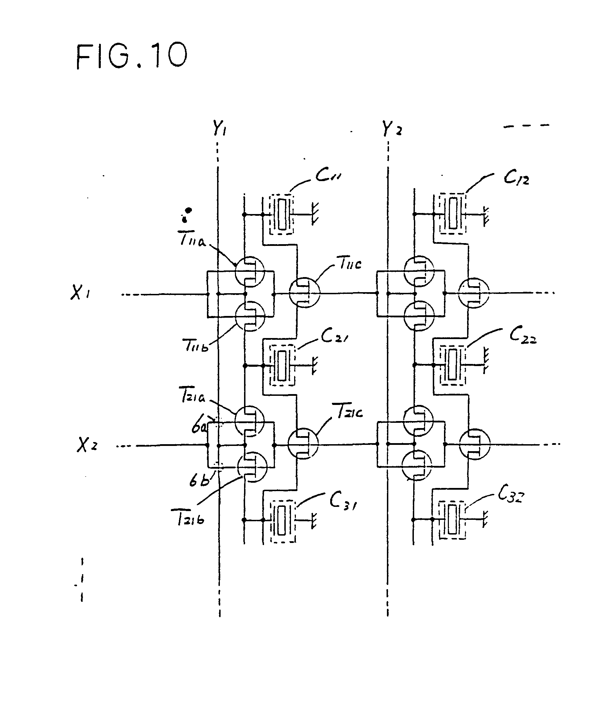

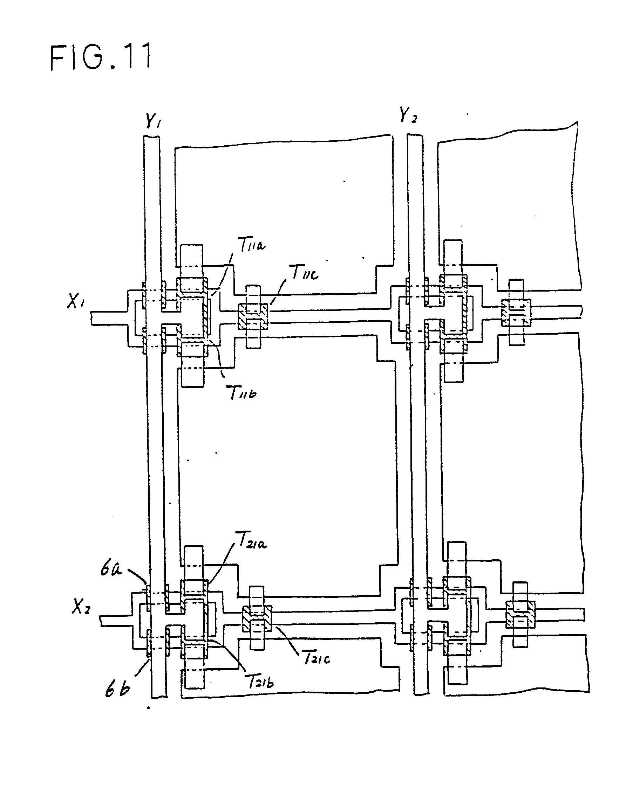

Fig. 10 shows another embodiment of active matrix circuit using transistor switching elements, and Fig. 11 shows a partial mask lay-out pattern of the circuit in Fig. 10. Referring to Fig. 10, each scanning line $(X_2$, for example) is divided into two branch lines (6a and 6b, for example) at each cross point of the scanning line and a signal line. Each two branch lines (6a and 6b, for example) are respectively connected with gates of first and second transistors $(T_{21a}$ and $T_{21b}$, for example) which are respectively connected at their sources in common with a signal line $(Y_1$, for example) crossing the branch lines, and at their drains separately with two adjacent pixels $(C_{21}$ and $C_{31}$, for example) disposed at both sides of the scanning line $(X_2)$ having the branch lines (6a and 6b). Adjacent pixels $(C_{21}$ and $C_{31}$, for example) in each column are further connected with each other through a third transistor $(T_{21c}$, for example) which is connected at its gate with a scanning line $(X_2$, for example) between the adjacent pixels.

First, the operation for controlling the pixel $C_{21}$ will be described in the case that the third transistor $T_{21c}$ does not exist. Selection pulses shown in Fig. 13 are applied to the scanning lines in the same way as the previous embodiments. When the scanning line $X_1$ is selected a signal voltage

$V_{11}$ on the signal line $Y_1$ for the pixel $C_{11}$ is applied to the pixel $C_{21}$ via the second transistor $T_{11b}$. When the scanning line $X_2$ is selected a signal voltage $V_{21}$ on the signal line $Y_1$ for the pixel $C_{21}$ is applied to the pixel $C_{21}$ via the first transistor $T_{21a}$. The pixel $C_{21}$ holds the voltage $V_{21}$ until the scanning line $X_1$ is selected in the next frame. If the first transistor $T_{21a}$ is defected and thus isolated from the circuit, the pixel $C_{21}$ holds the voltage $V_{11}$ until the scanning line $X_1$ is selected in the next frame. Since there is a close correlation between adjacent pixels (between $C_{21}$ and $C_{11}$ in this case), the pixel $C_{21}$ holding the same signal voltage as that held by the pixel $C_{11}$ is not recognized as a pixel defect.

Next, the operation for controlling the pixel $C_{21}$ will be described in the case that the third transistor $T_{21c}$ exists. If the first transistor $T_{21a}$ is defected and isolated from the circuit, the signal voltage $V_{21}$ is applied to the pixel $C_{21}$ via the second and third transistors $T_{21b}$ and $T_{21c}$ when the scanning line $X_2$ is selected. Therefore, the pixel $C_{21}$ operates normally even if the first transistor $T_{21a}$ is defected. If the second transistor $T_{21b}$ is defected, it is apparent that the pixel $C_{21}$ operates normally under the control of the first and third transistors $T_{21a}$ and $T_{21c}$.

Embodiment 7

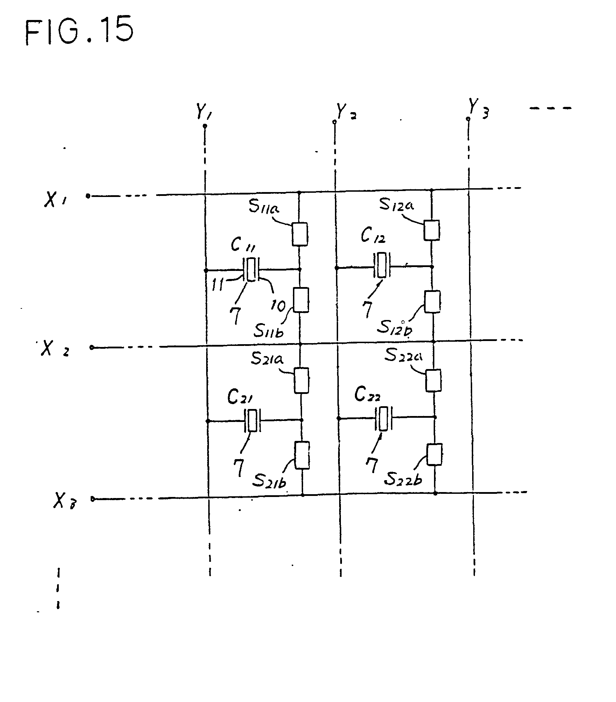

Fig. 15 shows an embodiment of active matrix circuit using non-linear switching elements. Referring to Fig. 15, each pixel ($C_{21}$, for example) is connected at one terminal with a respective signal line ($Y_1$), and at the other terminal with adjacent two scanning lines ($X_2$ and $X_3$) via two non-linear switching elements ($S_{21a}$ and $S_{21b}$), respectively. Selection pulses as shown in Fig. 19 are applied to the scanning lines in the same way as the conventional circuit shown in Fig. 17. When the scanning line $X_2$ is selected the pixel $C_{21}$ is applied with a voltage corresponding to a signal voltage $V_{11}$ on the signal line $Y_1$ for the pixel $C_{11}$ via the switching element $S_{21a}$. When the scanning line $X_3$ is selected the pixel $C_{21}$ is applied with a voltage corresponding to a signal voltage $V_{21}$ on the signal line $Y_1$ for the pixel $C_{21}$ via the switching element $S_{21b}$. The pixel $C_{21}$ hold the voltage corresponding to the signal voltage $V_{21}$ until the scanning line $X_2$ is selected in the next frame. Since the time that the pixel $C_{21}$ temporarily holds the voltage corresponding to $V_{11}$ is adequately small relative to the time that the pixel $C_{21}$ holds the voltage corresponding to $V_{21}$, the pixel $C_{21}$ is recognized to be operating normally.

If the non-linear switching element $S_{21b}$ is defected, the electrical connection between the element $S_{21b}$ and the respective scanning line $X_3$ or the respective pixel $C_{21}$ is cut off so that the element $S_{21b}$ is electrically isolated from the circuit. In this case, the pixel $C_{21}$ holds the voltage corresponding to the signal voltage $V_{11}$, i.e. the same voltage as that held by $C_{11}$ until the scanning line $X_2$ is selected in the next frame. Since there is usually a close correlation between signal voltages for adjacent pixels ($C_{21}$ and $C_{11}$ in this case), the pixel $C_{21}$ is not recognized as a defect pixel.

The non-linear switching elements may be varis-tors, MIMs, diode rings, back-to-back diodes, diode-connected MOS transistors, or any other devices having the characteristic as shown in Fig. 18.

Defected elements can be identified by applying proper test signals to the scanning and signal lines to display a test pattern. The thus identified defected elements are then electrically isolated by means of such as a laser trimming.

In the embodiments described above, supposing that probability to cause an element defect is $10^{-4}$, probability that two switching elements connected to one pixel are both defected at the same time becomes $2 \times 10^{-4} \times 10^{-4} = 2 \times 10^{-8}$. Therefore if the number of pixels is 250,000, the case that two switching elements connected to one pixel are both defected would not occur.

**Claims**

1. An active matrix circuit for liquid crystal displays comprising:

a plurality of liquid crystal pixels (C) arranged in a matrix;

in a plurality of scanning lines (X) respectively applied with successive selection pulses for selecting said pixels in turn row by row;

a plurality of signal lines (Y) applied with signal voltages to be applied to said pixels to be selected; and

a plurality of switching elements (T) responsive to said selection pulses to apply said signal voltages to said pixels;

wherein each pixel ($C_{mn}$) of said plurality of pixels is connected to at least two switching elements ($T_{mna}$, $T_{mnb}$) of said plurality of switching elements said two switching elements being respectively responsive to one of two successive selection pulses applied to two adjacent scanning lines ($X_m$, $X_{m+1}$) of said plurality of scanning lines to select said each pixel, characterised in that said plurality of switching elements (T) include at least one defective switching element, each defective switching element having at least a first terminal for connection to a corresponding one of said plurality of scanning lines and a second terminal for connection to a corresponding one of said pixels, and in that at least one of said first and second terminals is cut so as to be electrically isolated from the circuit.

2. A circuit according to claim 1, wherein the switching elements (T) are transistor switching elements responsive to said selection pulses to apply said signal voltages to said pixels (C), and

wherein each pixel ($C_{mn}$) of said plurality of pixels (C) has one terminal connected to ground and another terminal to two transistor switching elements ($T_{mna}$, $T_{mnb}$) of said plurality of transistor switching elements (T) which are respectively connected at their control terminals (1) with two adjacent scanning lines of said plurality of scanning lines (X) to select said each pixel ($C_{mn}$).

3. A circuit according to claim 2, wherein said two transistor switching elements ($T_{mna}$, $T_{mnb}$) are connected at their one main terminal (2) in common with one of said plurality of signal lines (Y) and at their other main terminals (3) in common with said the other terminal of said each pixel ($C_{mn}$).

4. A circuit according to claim 3, wherein said pixels (C) disposed in each column are connected alternately with two adjacent signal lines ($Y_n$, $Y_{n+1}$) of said plurality of signal lines (Y) via said transistor switching elements ($T_{mna}$, $T_{mnb}$).

5. A circuit according to claim 2, wherein said two transistor switching elements ($T_{mna}$, $T_{mnb}$) are connected at their one main terminals (2) respectively with two adjacent signal lines ($Y_n$, $Y_{n+1}$) of said plurality of signal lines (Y) and at their the other main terminals (3) in common with said the other terminal of said each pixel ($C_{mn}$).

6. A circuit according to claim 5, wherein said pixels (C) in each row are arranged in a predetermined color order and the arrangement of said pixels in one row is shifted from the arrangement of said pixels in an adjacent row.

7. A circuit according to claim 2, further comprising a plurality of transistor switching elements each ($T_{mnc}$) connected at its control terminal with one scanning line ($X_m$) of said plurality of scanning lines (X) and at its main terminals respectively with two adjacent pixels of said plurality of pixels (C) disposed at both sides of said one scanning line.

8. A circuit according to claim 2, wherein one of said two transistor switching elements ($T_{mna}$, $T_{mnb}$) is connected at its one main terminal with one signal line ($Y_n$) of said plurality of signal lines (Y) and at its other main terminal with said other terminal of said each pixel ($C_{mn}$), and the other of said two transistor switching elements ($T_{mna}$, $T_{mnb}$) is connected at its one main terminal with said the other terminal of a pixel adjacent to said each pixel in a column direction and at its other main terminal with said the other terminal of said each pixel.

9. A circuit according to claim 1, wherein each scanning line ($X_m$) of said scanning lines (X) being divided into two branch lines at each cross-point of said each scanning line and each of said signal lines ($Y_n$); and wherein said plurality of switching elements (T) comprise:

a plurality of pairs of first and second transistor switching elements response to said selection pulses to select said pixels, each pair ($T_{mna}$, $T_{mnb}$) of first and second transistor switching elements being connected at their control terminals respectively with said two branch lines, at their first main terminals in common with one of said plurality of signal lines (Y), and at their other main terminals respectively with adjacent two pixels ($C_{mn}$, $C_{m+1n}$) disposed in a column direction; and

a plurality of third transistor switching elements each ($T_{mnc}$) connected at its control terminal with one scanning line of said plurality of scanning lines and at its main terminals respectively with said adjacent two pixels disposed at both sides of said one scanning line.

10. A circuit according to claim 1, wherein said plurality of switching elements (T) comprise:

a plurality of non-linear switching elements (S) responsive to said selection pulses to apply said signal voltages to said pixels (C), and

wherein each pixel ($C_{mn}$) of said plurality of pixels is connected at one terminal with one of said plurality of signal lines (Y) and at the other terminal with one terminals of two non-linear switching elements ($S_{mna}$, $S_{mnb}$) of said plurality of non-linear switching elements, the other terminals of said two non-linear switching elements being respectively connected with two adjacent scanning lines of said plurality of scanning lines at both sides of said each pixel.

## Patentansprüche

1. Aktive Matrixschaltung für Anzeigen mit Hilfe von Flüssigkristallen

mit mehreren in einer Matrix angeordneten Flüssigkristall-Lichterregungspunkten (C),

mit mehreren Abtastleitungen (X), denen jeweils aufeinanderfolgende Wahlimpulse zugeführt werden, um die Lichterregungspunkte der Reihe nach Zeile für Zeile anzuwählen,

mit mehreren Signalleitungen (Y), denen Signalspannungen zugeführt werden, die an die anzuwählenden Lichterregungspunkte herangebracht werden, und

mit mehreren Schaltelementen (T), die auf die Wahlimpulse ansprechen, um die Signalspannungen den Lichterregungspunkten zuzuleiten,

bei der jeder Lichterregungspunkt ($C_{mn}$) unter den zahlreichen Lichterregungspunkten mit mindestens zwei Schaltelementen ($T_{mna}$, $T_{mnb}$) unter den Schaltelementen in Verbindung steht, die jeweils auf zwei aufeinanderfolgende Wahlimpulse ansprechen, die den beiden benachbarten Abtastleitungen ($X_m$, $X_{m+1}$) zugeführt werden, um jeden Lichterregungspunkt anzuwählen,

dadurch gekennzeichnet, daß zu den Schaltelementen (T) mindestens ein fehlerhaftes Schaltelement gehört, das jeweils mindestens einen ersten Anschluß zur Verbindung mit einer entsprechenden Abtastleitung und einen zweiten Anschluß zur Verbindung mit einem entsprechenden Lichterregungspunkt aufweist, und daß mindestens einer der beiden Anschlüsse derart abgetrennt wird, daß er elektrisch gegenüber der Schaltung isoliert ist.

2. Schaltung gemäß Anspruch 1, bei der die Schaltelemente (T) mit Transistoren bestückt sind, die auf die Wahlimpulse ansprechen, um die Signalspannungen den Lichterregungspunkten (C) zuzuleiten, und bei der jeder Lichterregungspunkt ($C_{mn}$) unter den zahlreichen Lichterregungspunkten (C) einen an Erde liegenden Anschluß und einen weiteren Anschluß an zwei mit Transistoren bestückten Schaltelementen ($T_{mna}$, $T_{mnb}$) unter den Schaltelementen (T) aufweist, die jeweils an ihren Steuerungsanschlüssen (1) mit den beiden benachbarten Abtastleitungen unter den zahlreichen Abtastleitungen (X) verbunden sind, um jeden der Lichterregungspunkte ($C_{mn}$) anzuwählen.

3. Schaltung gemäß Anspruch 2, bei der die beiden mit Transistoren bestückten Schaltelemente ($T_{mna}$, $T_{mnb}$) an ihrem einen Hauptanschluß (2) gemeinsam mit einer der Signalleitungen (Y) und an ihren anderen Hauptanschlüssen (3) gemeinsam mit dem anderen Anschluß jedes Lichterregungspunktes ($C_{mn}$) verbunden sind.

4. Schaltung gemäß Anspruch 3, bei der die in jeder Spalte angeordenten Lichterregungspunkte (C) über die mit Transistoren bestückten Schaltelemente ($T_{mna}$, $T_{mnb}$) abwechselnd mit den beiden benachbarten Signalleitungen ($Y_n$, $Y_{n+1}$) unter den zahlreichen Signalleitungen (Y) verbunden werden.

5. Schaltung gemäß Anspruch 2, bei der die beiden mit Transistoren bestückten Schaltelemente ($T_{mna}$, $T_{mnb}$) an ihrem einen Hauptanschluß (2) jeweils mit den beiden benachbarten Signalleitungen ($Y_n$, $Y_{n+1}$) unter den Signalleitungen (Y) und an ihrem anderen Hauptanschluß (3) gemeinsam mit dem anderen Anschluß jedes der Lichterregungspunkte ($C_{mn}$) verbunden werden.

6. Schaltung gemäß Anspruch 5, bei der die Lichterregungspunkte (C) jeder Zeile in einer vorgegebenen Farbreihenfolge angeordnet sind und die Anordnung der Lichterregungspunkte in einer Zeile gegenüber der Anordnung der Lichterregungspunkte in einer benachbarten Zeile verschoben ist.

7. Schaltung gemäß Anspruch 2, bei der ferner mehrere mit Transistoren bestückte Schaltelemente ($T_{mnc}$) jeweils an ihrem Steuerungsanschluß mit einer Abtastleitung ($X_m$) unter den zahlreichen Abtastleitungen (X) und an ihren Hauptanschlüssen jeweils mit den beiden benachbarten Lichterregungspunkten (C) in Verbindung stehen, die auf beiden Seiten der einen Abtastleitung angeordnet sind.

8. Schaltung gemäß Anspruch 2, bei der eines der beiden mit Transistoren bestückten Schaltelemente ($T_{mna}$, $T_{mnb}$) an seinem einen Hauptanschluß mit der einen Signalleitung ($Y_n$) unter den Signalleitungen (Y) und an seinem anderen Hauptanschluß mit dem anderen Anschluß jedes Lichterregungspunktes ($C_{mn}$) in Verbindung steht und das andere der beiden mit Transistoren bestückten Schaltelemente ($T_{mna}$, $T_{mnb}$) an seinem einen Hauptanschluß mit dem anderen Anschluß eines Lichterergungspunktes, der in der Spaltenrichtung jedem der Lichterregungspunkte benachbart ist, und an seinem anderen Hauptanschluß mit dem anderen Anschluß jedes der Lichterregungspunkte in Verbindung steht.

9. Schaltung gemäß Anspruch 1, bei der jede Abtastleitung ($X_m$) unter den Abtastleitungen (X) an jedem Kreuzungspunkt jeder Abtastleitung und jeder Signalleitung ($Y_n$) in zwei Zweigleitungen unterteilt ist, und bei der zu den Schaltelementen (T) gehören:

mehrere Paare aus einem ersten und zweiten mit Transistoren bestückten Schaltelement, welche auf die Wahlimpulse zum Anwählen der Lichterregungspunkte ansprechen, wobei jedes Paar ($T_{mna}$, $T_{mnb}$) der beiden mit Transistoren bestückten Schaltelemente an seinen Steuerungsanschlüssen jeweils mit den beiden Zweigleitungen, an seinen ersten Hauptanschlüssen gemeinsam mit einer der Signalleitungen (Y) und an seinen anderen Hauptanschlüssen jeweils mit den beiden benachbarten, in einer Spaltenrichtung angeordneten Lichterregungspunkten ($C_{mn}$, $C_{m+1n}$) in Verbindung steht, und

mehrere dritte mit Transistoren bestückte Schaltelemente ($T_{mnc}$), die jeweils an ihren Steuerungsanschlüssen mit einer Abtastleitung unter den Abtastleitungen und an ihren Hauptanschlüssen jeweils mit den beiden benachbarten, zu beiden Seiten der einen Abtastleitung angeordneten Lichterregungspunkten in Verbindung stehen.

10. Schaltung gemäß Anspruch 1, bei der zu den Schaltelementen (T) gehören:

mehrere nichtlineare Schaltelemente (S), die auf die Wahlimpulse ansprechen, um die Signalspannungen den Lichterregungspunkten (C) zuzuleiten, und

bei der jeder Lichterregungspunkt ($C_{mn}$) unter den zahlreichen Lichterregungspunkten an einem Anschluß mit einer der zahlreichen Signalleitungen (Y) und an dem anderen Anschluß mit dem einen Anschluß von zwei nichtlinearen Schaltelementen ($S_{mna}$, $S_{mnb}$) unter den nichtlinearen Schaltelementen in Verbindung steht, während der andere Anschluß der beiden nichtlinearen Schaltelemente zu beiden Seiten jedes Lichterregungspunktes mit zwei benachbarten Abtastleitungen unter den zahlreichen Abtastleitungen verbunden ist.

**Revendications**

1. Circuit de matrice active pour des affichages à cristaux liquides, comportant:

plusieurs éléments d'image à cristaux liquides (C) disposés en une matrice,

plusieurs lignes de balayage (X) qui reçoivent sélectivement des impulsions de sélection successives pour sélectionner lesdits éléments d'image tour à tour, rangée par rangée,

plusieurs lignes de signaux (Y) qui reçoivent des signaux de tension qui doivent être appliqués auxdits éléments d'image à sélectionner, et

plusieurs éléments de commutation (T) réagissant auxdites impulsions de sélection en appliquant lesdites tensions de signaux auxdits éléments d'image,

dans lequel chaque élément d'image ($C_{mn}$) parmi lesdits plusieurs éléments d'image est connecté à au moins deux éléments de commutation ($T_{mna}$, $T_{mnb}$) parmi lesdits plusieurs éléments de commutation, lesdits deux éléments de commutation réagissant respectivement à l'une de deux impulsions successives de sélection appliquées à deux lignes de balayage voisines ($X_m$, $X_{m+1}$) desdites plusieurs lignes de balayage pour sélectionner chaque élément d'image, caractérisé en ce que lesdits plusieurs éléments de commutation (T) comprennent au moins un élément de commutation défectueux, chaque élément de commutation défectueux ayant au moins une première borne pour a connexion à l'une correspondante desdites plusieurs lignes de balayage et une seconde borne pour la connexion à l'un correspondant desdits éléments d'image et en ce que l'une au moins de ladite première et de ladite seconde bornes est coupée de manière à être isolée électriquement du circuit.

2. Circuit selon la revendication 1, dans lequel les éléments de commutation (T) sont des éléments de commutation à transistor qui réagissent auxdites impulsions de sélection en appliquant lesdites tensions de signaux auxdits éléments d'image (C), et

dans lequel chaque élément d'image ($C_{mn}$) desdits plusieurs éléments d'image (C) comporte une borne connectée à la masse et une autre borne à deux éléments de commutation à transistor ($T_{mna}$, $T_{mnb}$) parmi lesdits plusieurs éléments de commutation à transistor (T) qui sont connectés respectivement par leurs bornes de commande (1) à deux lignes de balayage voisines parmi lesdites plusieurs lignes de balayage (X) afin de sélectionner lesdits chaque éléments d'image ($C_{mn}$).

3. Circuit selon la revendication 2, dans lequel lesdits deux éléments de commutation à transistor ($T_{mna}$, $T_{mnb}$) sont connectés par l'une de leurs bornes principales (2) en commun avec l'une desdites plusieurs lignes de signaux (Y) et par leurs autres bornes principales (3) en commun avec ladite autre borne de chaque élément d'image ($C_{mn}$).

4. Circuit selon la revendication 3, dans lequel lesdits éléments d'image (C) disposés dans chaque colonne sont connectés alternativement avec deux lignes de signaux voisines ($Y_n$, $Y_{n+1}$) desdits plusieurs lignes de signaux (Y) par l'intermédiaire desdits éléments de commutation à transistor ($T_{mna}$, $T_{mnb}$).

5. Circuit selon la revendication 2, dans lequel lesdits deux éléments de commutation à transistor ($T_{mna}$, $T_{mnb}$) sont connectés par l'une de leurs bornes principales (2) respectivement à deux lignes de signaux voisines ($Y_n$, $Y_{n+1}$) desdits plusieurs lignes de signaux (Y) et par leurs autres bornes principales (3) en commun avec ladite autre borne de chaque élément d'image ($C_{mn}$).

6. Circuit selon la revendication 5, dans lequel lesdits éléments d'image (C) de chaque rangée sont disposés dans un ordre de couleur prédéterminé et la disposition desdits éléments d'image dans une rangée est décalée par rapport à la disposition desdits éléments d'image dans une rangée voisine.

7. Circuit selon la revendication 2, comportant en outre plusieurs éléments de commutation à transistor connectés chacun ($T_{mnc}$) par sa borne de commande avec une ligne de balayage ($X_m$) parmi lesdites plusieurs lignes de balayage (X) et par ses bornes principales respectivement avec deux éléments d'image voisins parmi lesdits plusieurs éléments d'image (C) disposés des deux côtés de ladite ligne de balayage.

8. Circuit selon la revendication 2, dans lequel l'un des deux éléments de commutation à transistor ($T_{mna}$, $T_{mnb}$) est connecté à l'une de ses bornes principales avec une ligne de signaux ($Y_n$) parmi lesdites plusieurs lignes de signaux (Y) et par son autre borne principale avec ladite autre borne de chaque élément d'image ($C_{mn}$), et l'autre desdites deux éléments de commutation à transistor ($T_{mna}$, $T_{mnb}$) étant connecté par l'une de ses bornes principales avec ladite autre borne d'un élément d'image voisin de chaque élément d'image dans la direction des colonnes et par son autre borne principale avec ladite autre borne dudit élément d'image.

9. Circuit selon la revendication 1, dans lequel chaque ligne de balayage ($X_m$) parmi lesdites lignes de balayage (X) est divisée en deux lignes de branchement à chaque intersection de chacune des lignes de balayage et de chacune desdites lignes de signaux ($Y_n$) et dans lequel lesdits plusieurs éléments de commutation (T) comportent:

plusieurs paires d'un premier et d'un second éléments de commutation à transistor réagissant auxdites impulsions de sélection en sélectionnant lesdits éléments d'image, chaque paire ($T_{mna}$, $T_{mnb}$) d'un premier et d'un second éléments de commutation à transistor étant connectée respectivement par leurs bornes de commande avec lesdites deux lignes de branchement, par leurs premières bornes principales en commun avec l'une desdites plusieurs lignes de signaux (Y) et par leurs autres bornes principales respectivement à deux éléments d'image voisins ($C_{mn}$, $C_{m+in}$) disposés dans une direction de colonnes, et plusieurs troisièmes éléments de commutation à transistor connectés chacun ($T_{mnc}$) par sa borne de commande à une ligne de balayage parmi lesdites plusieurs lignes de balayage et par ses bornes principales respectivement avec lesdits deux éléments d'image voisins disposés des deux côtés de ladite ligne de balayage.

10. Circuit selon la revendication 1, dans lequel lesdits plusieurs éléments de commutation (T) comprennent:

plusieurs éléments non linéaires de commutation (S) réagissant auxdites impulsions de sélection en appliquant lesdites tensions de signaux auxdits éléments d'image (C), et

dans lequel chaque élément d'image ($C_{mn}$) desdits plusieurs éléments d'image est connecté par une borne avec l'une desdites plusieurs lignes de signaux (Y) et par l'autre borne avec l'une des bornes de deux éléments non linéaires de commutations ($S_{mna}$, $S_{mnb}$) parmi lesdits plusieurs éléments non linéaires de commutation, les autres bornes desdits éléments non linéaires de commutation étant connectées respectivement à deux lignes de balayage voisines parmi lesdites plusieurs lignes de balayage des deux côtés de chaque élément d'image.

FIG.1

FIG. 2

FIG. 3

FIG. 4

| R | G | B | R | G | --- |
| B | R | G | B | R | --- |
| G | B | R | G | B | --- |
| R | G | B | R | G | --- |

FIG.5

FIG.6

FIG.7 (a)          FIG.7 (b)

5

# FIG.8

# FIG. 9

# FIG. 10

# FIG.11

# FIG.12    PRIOR ART

## FIG.13   PRIOR ART

## FIG.14   PRIOR ART

# FIG.15

# FIG.16 PRIOR ART

(a) (b) (c)

# FIG.17 PRIOR ART

# FIG.18 PRIOR ART

# FIG.19
PRIOR
ART